# FASCICULE DE BREVET EUROPEEN

(11) **EP 1 532 388 B1**
(45) Date de publication et mention de la délivrance du brevet: **22.10.2008**
(21) Numéro de dépôt: 03758230.1
(22) Date de dépôt: 11.08.2003
(51) Int. Cl.: F16L 15/04

(54) **JOINT FILETE TUBULAIRE ETANCHE VIS-A-VIS DU MILIEU EXTERIEUR**
GEGEN DIE UMGEBUNG ABGEDICHTETE SCHRAUBVERBINDUNG FÜR ROHRE
TUBULAR THREADED JOINT WHICH IS IMPERVIOUS TO THE EXTERNAL ENVIRONMENT

(30) Priorité: 29.08.2002 FR 0210727
(43) Date de publication de la demande: 25.05.2005
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: ROUSSIE, Gabriel, F-59242 Cappelle en Pévèle (FR)
(74) Mandataire: Rousset, Jean-Claude
(86) Numéro de dépôt international: PCT/FR2003/002509
(87) Numéro de publication internationale: WO 2004/020889

(56) Documents cités:
- EP-A- 0 867 596
- DE-C- 4 007 408
- US-A- 2 380 690
- US-A- 2 960 353
- US-A- 4 878 285
- US-A- 4 988 127

## Description

L'invention concerne un procédé de réalisation d'un joint fileté tubulaire comprenant un élément tubulaire mâle comportant un filetage mâle conique, un élément tubulaire femelle comportant un filetage femelle conique qui coopère par vissage avec le filetage mâle, et un anneau d'étanchéité déformable interposé entre les éléments mâle et femelle de manière à s'opposer à la communication de fluide entre l'extérieur du joint tubulaire et la zone de coopération desdits filetages, l'anneau d'étanchéité étant en contact étanche avec le filetage mâle, et l'élément femelle présentant un logement annulaire pour recevoir l'anneau d'étanchéité, disposé axialement entre son extrémité libre et le filetage femelle et limité axialement par un premier épaulement tourné vers ladite extrémité libre, l'anneau d'étanchéité s'appuyant axialement contre ledit premier épaulement et étant en contact étanche avec la surface périphérique du logement, procédé.

On connaît de tels joints filetés tubulaires dans lesquels l'élément mâle est formé en extrémité d'un tube de grande longueur et l'élément femelle en extrémité d'un autre tube de grande longueur ou d'un composant tubulaire de plus faible longueur tel qu'un manchon de raccordement, ces joints permettant d'assembler bout à bout une multiplicité de tubes pour former une colonne, notamment dans des puits d'hydrocarbure, où cette colonne sert pour l'exploitation des hydrocarbures (colonne de tubes de production) ou pour maintenir les terres (colonne de tubes de cuvelage).

L'American Petroleum Institute a depuis longtemps défini des spécifications API 5B et 5CT pour de tels joints filetés à filetages coniques et à filets triangulaires arrondis ou à filets trapézoïdaux. L'étanchéité de ces joints n'est toutefois obtenue que grâce à des graisses chargées en particules solides, qui remplissent les espaces hélicoïdaux entre les filetages mâle et femelle.

Il a été proposé d'améliorer les caractéristiques d'étanchéité de ces joints, soit en prévoyant sur les éléments mâle et femelle des surfaces d'étanchéité métalliques qui sont sous pression de contact mutuel grâce à un serrage radial, soit au moyen d'anneaux d'étanchéité en matériau déformable tel que polytétrafluoréthylène, soit à l'aide d'une combinaison de ces moyens.

EP 0 488 912 A décrit un joint fileté ayant une surface d'étanchéité métallique tronconique disposé à l'extrémité de l'élément fileté mâle et une surface d'étanchéité métallique correspondante prévue sur l'élément fileté femelle. Ce joint fileté présente d'excellentes caractéristiques d'étanchéité vis-à-vis de fluides circulant tant à l'intérieur qu'à l'extérieur du joint. Cependant, du fluide peut s'infiltrer de l'extérieur sur tout ou partie des filetages et entraîner des risques de corrosion de ces derniers lorsque le fluide est corrosif.

Les mêmes avantages et les mêmes inconvénients se retrouvent dans le joint fileté de DE 4 317 591 A, qui présente un anneau d'étanchéité déformable disposé dans une gorge annulaire de l'élément fileté femelle et imprimé dans les filets mâles au voisinage de l'extrémité libre de l'élément mâle.

Une telle infiltration depuis le milieu extérieur est particulièrement néfaste dans le cas de joints filetés pour colonnes montantes sous-marines dites "risers" disposées entre le fond de l'océan et une plate-forme marine pour isoler de l'eau de mer les tubes de production des puits de gisements sous-marins, l'eau de mer pouvant provoquer une corrosion sévère dans les espaces fortement confinés entre les filetages mâle et femelle.

US 5 687 999 A décrit un joint fileté à filetages coniques possédant des portées d'étanchéité métalliques aux deux extrémités longitudinales des filetages, et qui devrait donc être exempt des inconvénients précités. Toutefois, les sollicitations cycliques auxquelles sont soumises les colonnes sous-marines du fait des courants tendent à amorcer des fissurations des surfaces d'étanchéité par glissement mutuel des surfaces mâle et femelle. On peut certes envisager d'empêcher ces glissements en mettant en butée axiale les extrémités libres des éléments filetés, mais il en résulterait une augmentation des épaisseurs des tubes au moins aux extrémités de ceux-ci, et par conséquent une augmentation de leur coût.

US 4 878 285 décrit un joint tubulaire selon le préambule de la revendication 19.

Le but de l'invention est d'éliminer les inconvénients ci-dessus, et par conséquent de permettre la réalisation d'un joint fileté tubulaire particulièrement adapté aux colonnes tubulaires sous-marines montantes soumises à des sollicitations cycliques.

L'invention vise particulièrement à réaliser un joint fileté tubulaire dont les éléments mâle et femelle sont très proches de ceux utilisés couramment pour les colonnes de tubes de cuvelage, notamment en ce qui concerne leur épaisseur, et de ce fait peu coûteux à réaliser.

La réalisation du joint fileté tubulaire selon l'invention doit également être possible aussi bien directement en extrémité de tubes de grande longueur (assemblage intégral) qu'entre un tube et un manchon destiné et relier deux tubes de grande longueur (assemblage manchonné).

L'invention vise notamment un procédé du genre défini en introduction, et prévoit qu'on met en place autour dudit filetage mâle un anneau d'étanchéité déformable, on engage l'extrémité libre de l'élément mâle, et on visse le filetage mâle dans le filetage femelle, ledit anneau d'étanchéité, pendant le vissage, étant poussé le long de l'élément mâle par ledit premier épaulement, entraîné en rotation par l'élément femelle et comprimé radialement entre le filetage mâle, dans lequel il s'imprime, et ladite surface périphérique du logement.

Les termes "étanchéité" et "contact étanche" se réfèrent ici à des mesures destinées non pas nécessairement à empêcher tout accès de fluide au contact des filetages, mais au moins à y limiter un tel accès de manière à empêcher pratiquement un renouvellement du fluide et par conséquent une corrosion notable.

Des caractéristiques optionnelles de l'invention, complémentaires ou de substitution, sont énoncées ci-après:
- L'anneau d'étanchéité est en un matériau choisi parmi les matériaux synthétiques, les métaux malléables et les matériaux composites.
- L'anneau d'étanchéité est en un matériau possédant un faible coefficient de frottement avec le matériau de l'élément mâle.
- L'anneau d'étanchéité est en polytétrafluoréthylène chargé ou non.
- Le filetage mâle comprend à l'opposé de l'extrémité libre de l'élément mâle des filets dits évanouissants dont la hauteur radiale va généralement en diminuant d'une valeur nominale à une valeur nulle, et l'anneau d'étanchéité est en contact étanche avec lesdits filets évanouissants sur une partie au moins de sa longueur axiale.
- L'anneau d'étanchéité est en contact avec lesdits filets évanouissants sur toute sa longueur axiale.
- On met en place l'anneau d'étanchéité autour desdits filets évanouissants.
- L'élément mâle est usiné, sur une fraction au moins de la longueur axiale des filets évanouissants, à un diamètre constant supérieur au diamètre des fonds des filets concernés.
- On met en place l'anneau d'étanchéité autour de la région de l'élément mâle usinée à diamètre constant.
- Ledit logement présente un second épaulement tourné axialement vers le premier épaulement et d'un diamètre minimal supérieur à celui du premier épaulement, une partie du volume de l'anneau d'étanchéité étant comprimée axialement entre les premier et second épaulements.
- Le premier épaulement, ou l'un au moins des premier et second épaulements, est incliné par rapport à l'axe des filetages.
- Ledit logement débouche à l'extrémité libre de l'élément femelle par un évasement.
- L'élément mâle présente, au voisinage de son extrémité libre, une surface de butée axiale propre à coopérer avec une surface de butée axiale de l'élément femelle pour limiter le vissage.
- Des moyens d'étanchéité supplémentaires sont prévus pour interdire toute communication de fluide entre l'intérieur du joint tubulaire et la zone de coopération des filetages.
- On met en place l'anneau d'étanchéité avec serrage sur le filetage mâle.
- On met en place l'anneau d'étanchéité autour du filetage mâle à une température telle que son diamètre intérieur soit supérieur au diamètre extérieur des filets sous-jacents, son diamètre intérieur étant inférieur au diamètre extérieur des filets sous-jacents à la température ambiante.
- L'anneau d'étanchéité est un anneau torique de section rectangulaire allongée dans la direction axiale.
- Le diamètre extérieur de l'anneau d'étanchéité après sa mise en place autour du filetage mâle est légèrement inférieur au rayon minimal de la surface périphérique dudit logement.

L'invention a également pour objet un joint fileté tubulaire comprenant un élément tubulaire mâle comportant un filetage mâle conique, un élément tubulaire femelle comportant un filetage femelle conique qui coopère par vissage avec le filetage mâle (3), et un anneau d'étanchéité déformable qui s'interpose après serrage entre les éléments mâle et femelle de manière à s'opposer à la communication de fluide entre l'extérieur du joint tubulaire et la zone de coopération desdits filetages, l'élément femelle présentant un logement annulaire, disposé axialement entre son extrémité libre et le filetage femelle et limité axialement par un premier épaulement tourné vers ladite extrémité libre, en ce que l'anneau d'étanchéité déformable est monté sur l'élément mâle pour être en contact étanche avec le filetage mâle, le diamètre extérieur au repos de l'anneau étant un peu inférieur au diamètre intérieur du logement, tandis qu'au serrage, ledit logement reçoit l'anneau d'étanchéité, lequel s'appuie axialement contre ledit premier épaulement et vient en contact étanche avec la surface périphérique du logement.

Le joint fileté tubulaire selon l'invention peut comporter au moins certaines des particularités suivantes:
- Les premier et seconds épaulements sont respectivement perpendiculaire à l'axe des filetages et incliné par rapport à celui-ci.
- Le logement présente un diamètre constamment croissant en direction de l'extrémité libre de l'élément femelle, sa paroi périphérique étant fortement inclinée par rapport à l'axe des filetages à l'opposé de ladite extrémité libre pour former un épaulement propre à pousser l'anneau d'étanchéité lors du vissage des éléments filetés, et son angle décroissant ensuite progressivement.
- Ledit évasement et le premier épaulement sont reliés entre eux par une surface cylindrique 28.

Les caractéristiques et avantages de l'invention seront exposés plus en détail dans la description ci-après, en se référant aux dessins annexés.

La figure 1 est une demi-vue en coupe axiale d'un élément tubulaire mâle destiné à faire partie d'un joint fileté tubulaire selon l'invention.

La figure 2 est une demi-vue en coupe axiale d'un anneau de matériau d'étanchéité destiné à former, après vissage des éléments des figures 1 et 4, l'anneau d'étanchéité du joint fileté tubulaire selon l'invention.

La figure 3 est un détail agrandi de la figure 1.

La figure 4 est une demi-vue en coupe axiale d'un élément tubulaire femelle destiné à être associé à l'élément mâle de la figure 1 pour former le joint fileté tubulaire selon l'invention.

La figure 5 est une demi-vue en coupe axiale du joint selon l'invention assemblé.

Les figures 6 à 8 sont des demi-vues en coupe axiale de variantes de la lèvre femelle de l'élément femelle, les figures 6 et 7 montrant également l'anneau d'étanchéité associé.

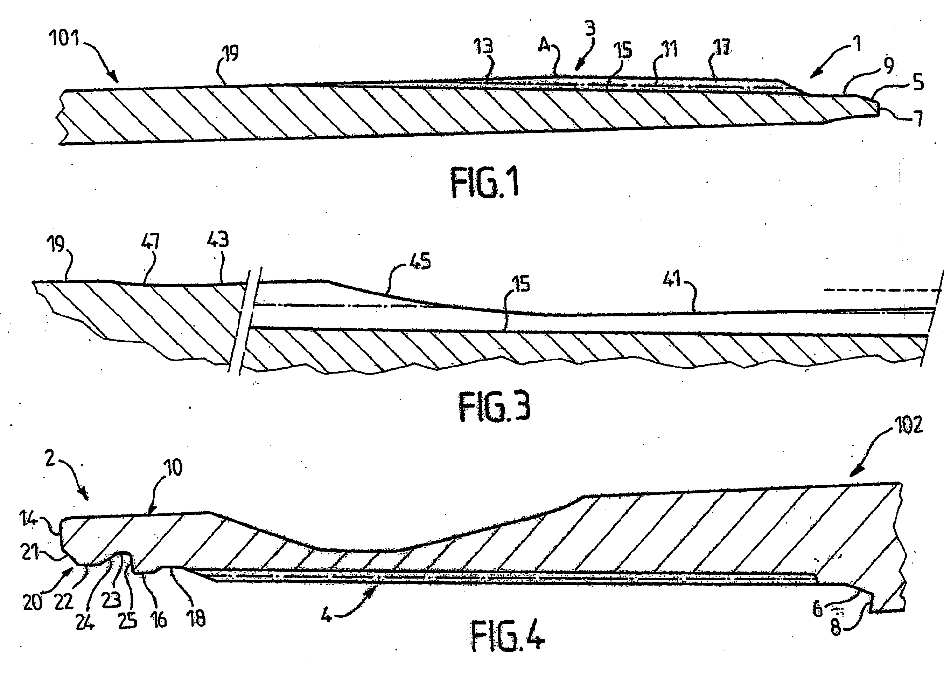

L'élément fileté mâle de la figure 1 est réalisé en extrémité d'un tube de grande longueur 101. Il comprend un filetage conique mâle continu 3 à filets trapézoïdaux. Sur une partie 11 de sa longueur, le filetage 3 est formé de filets dits parfaits qui présentent une hauteur de filets constante et égale à une valeur nominale entre une enveloppe de fonds de filets 15 et une enveloppe de sommets de filets 17, toutes deux tronconiques. Sur la partie restante 13 du filetage, les filets sont imparfaits ou évanouissants avec une enveloppe de fonds de filets tronconique prolongeant celle des filets parfaits, et une enveloppe de sommets de filets constituée par la surface périphérique extérieure cylindrique 19 du tube 101. Sous réserve des surfaces cylindriques d'usinage décrites plus loin, les filets évanouissants ont donc une hauteur qui diminue progressivement de la valeur nominale précitée à une hauteur nulle.

En l'absence de ces surfaces cylindriques d'usinage, le point de jonction A entre les parties 11 et 13 du filetage correspond à l'intersection entre l'enveloppe 17 des sommets des filets parfaits et la surface périphérique 19. Le filetage étant positionné de manière précise, par usinage, par rapport à l'extrémité libre 7 du tube 101, la position axiale du point A dépend du diamètre extérieur effectif du tube, pour lequel la tolérance est par exemple égale à ±1 % pour les tubes sans soudure laminés à chaud.

L'élément 1 comprend une lèvre mâle 9 s'étendant entre son extrémité libre 7 et le filetage 3. L'extrémité libre peut être définie par une surface plane perpendiculaire à l'axe du filetage. De préférence, comme représentée, elle est définie par une surface tronconique concave 7 dont le demi-angle au sommet est par exemple de 75 °. Cette surface sert de butée axiale lors du vissage de l'élément mâle dans l'élément femelle, et ses effets sont décrits plus en détail dans EP 0 488 912 A.

La surface d'extrémité 7 se raccorde à une surface d'étanchéité tronconique 5, comme décrit également dans EP 0 488 912 A.

On notera qu'aucune modification des éléments mâles existants n'est requise pour la mise en oeuvre de l'invention.

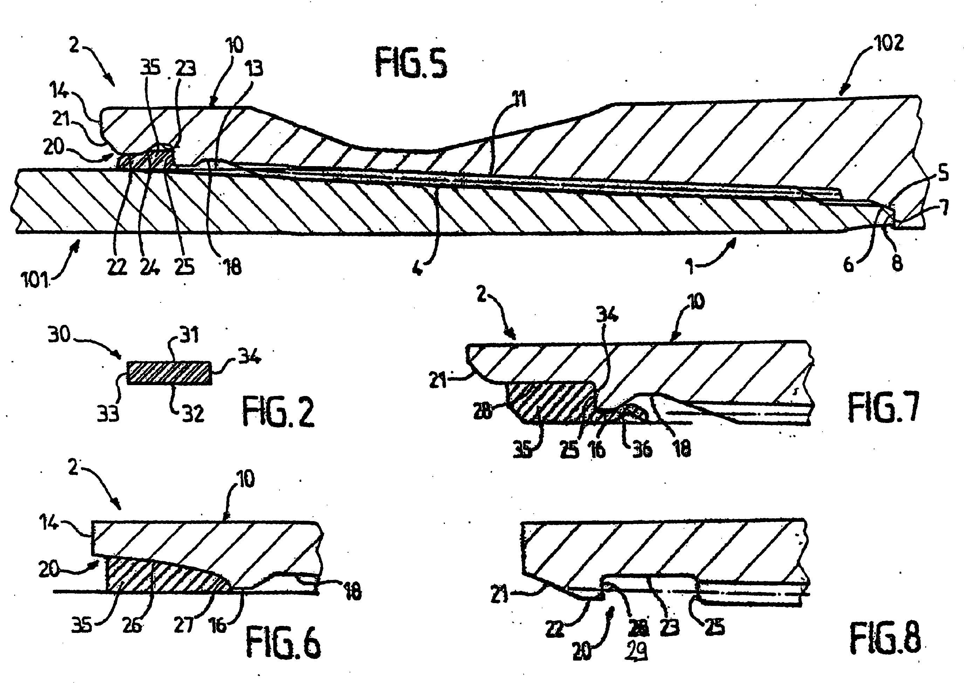

La figure 2 montre un anneau 30 en matériau d'étanchéité déformable, de préférence à faible coefficient de frottement, par exemple en polytétrafluoréthylène, polytétrafluoréthylène renforcé par des fibres de verre, polyamide ou métal mou tel que le cuivre. L'anneau 30 a une forme torique de révolution de section rectangulaire et présente donc une surface périphérique extérieure 31 cylindrique de révolution, une surface périphérique intérieure 32 cylindrique de révolution, coaxiale à la surface 31, et deux faces d'extrémité 33, 34, planes et perpendiculaires à l'axe des surface 31, 32. Le diamètre initial de la surface intérieure 32 est avantageusement légèrement inférieur au diamètre extérieur de l'élément tubulaire 1 à l'endroit où l'anneau doit être mis en place, par exemple au diamètre de la surface extérieure 19 pour une mise en place autour des filets évanouissants 13. Le diamètre de la surface extérieur 31, et par conséquent l'épaisseur radiale de l'anneau 30, sont choisis de manière à permettre l'introduction de l'anneau dans le logement prévu à cet effet dans l'élément femelle, au cours du vissage, et un contact étanche de l'anneau avec des éléments mâle et femelle en fin de vissage, comme il sera décrit plus loin.

La surface extérieure 19 du tube 101 présentant généralement une certaine ovalisation, il est avantageux, comme représenté sur la figure 3, de supprimer ou de réduire cette ovalisation, sur une partie au moins de la longueur de la partie filetée 13 à filets évanouissants, par un usinage selon une surface cylindrique de révolution. Dans l'exemple de la figure 3, deux surfaces cylindriques d'usinage sont prévues. Une première surface cylindrique 41 de plus petit diamètre qui commence dans la partie filetée 11 et s'étend principalement dans la partie filetée 13, et une seconde surface cylindrique 43 de plus grand diamètre se raccorde à la surface 41 selon un profil en arc concave 45 et s'étend jusqu'à la partie non filetée du tube 101, où elle se raccorde à la surface extérieure 19 selon un profil en arc concave 47. Le diamètre de la surface 41 et la position axiale du profil 45 sont choisis de telle sorte que l'usinage n'atteigne pas l'enveloppe 15 des fonds de filets. L'anneau 30 est avantageusement reçu sur la surface cylindrique 41. La surface 43 sert essentiellement à faciliter l'insertion de l'élément mâle dans l'élément femelle.

Pour mettre en place l'anneau 30 sur l'élément mâle 1, on le chauffe avantageusement à une température telle que son diamètre intérieur soit supérieur au diamètre extérieur de l'élément mâle à l'endroit qui doit le recevoir, par exemple au diamètre de la surface cylindrique 41. L'anneau peut être positionné au moyen d'un outil prenant appui sur la surface de butée 7. Après refroidissement, l'anneau est maintenu en place par serrage radial sur l'élément mâle.

L'élément fileté femelle 2 représenté sur la figure 4 est réalisé en extrémité d'un tube court ou manchon 102 qui permet un assemblage dit "fileté manchonné" de deux tubes de grande longueur tels que 101, les éléments filetés mâles de ceux-ci se vissant respectivement dans deux éléments filetés femelles formés aux deux extrémités du manchon. En variante, l'élément fileté femelle peut être réalisé en extrémité d'un tube de grande longueur de manière à permettre l'assemblage de celui-ci avec le tube 101, les éléments 1 et 2 formant alors un joint fileté dit intégral.

L'élément 2 illustré comprend un filetage conique femelle continu 4 à filets trapézoïdaux, formé exclusivement de filets parfaits.

Les caractéristiques géométriques des filetages 3 et 4 sont prévues pour permettre leur coopération par vissage.

L'élément 2 présente une lèvre femelle 10 s'étendant au-delà du filetage 4 jusqu'à son extrémité libre définie par une face plane 14 perpendiculaire à l'axe du tube 102. Dans une région intermédiaire de sa longueur, la lèvre 10 présente une surface intérieure 16 légèrement tronconique ouverte vers l'extrémité libre 14 et d'un diamètre minimal un peu supérieur au diamètre maximal de la surface 19 du tube 101. De part et d'autre de la surface 16, la lèvre est creusée intérieurement pour former, du côté du filetage 4 une gorge annulaire 18, et du côté de l'extrémité libre 14 un logement 20 pour l'anneau d'étanchéité. Le filetage 4 débouche dans la gorge 18 qui permet de dégager l'outil utilisé pour réaliser le filetage. Le logement 20 est délimité par une série de surfaces tronconiques, cylindriques et plane se raccordant entre elles par des arrondis. Une première surface tronconique 21 formant un chanfrein d'entrée, pour faciliter l'introduction de l'extrémité de l'élément mâle, se raccorde à la surface d'extrémité 14 et est suivie par une surface cylindrique 22 de plus grand diamètre que la surface 16. La surface 22 est reliée à une autre surface cylindrique 23 de plus grand diamètre par une surface tronconique 24 tournée à l'opposé de l'extrémité 14, et une surface plane 25 perpendiculaire à l'axe relie les surfaces cylindriques 16 et 23. Les surfaces 21, 22, 23 et 24 définissent ainsi la surface périphérique du logement, le rayon minimal de cette dernière étant celui de la surface 22.

Au-delà du filetage 4 par rapport à l'extrémité libre 14, l'élément femelle 2 présente une surface de butée tronconique 8 propre à coopérer avec la surface 7 de l'élément mâle, et une surface d'étanchéité tronconique 6 propre à coopérer avec la surface d'étanchéité 5 de l'élément mâle.

Au cours de l'assemblage par vissage des éléments 1 et 2, l'anneau 30, préalablement mis en place sur l'élément mâle comme décrit plus haut, et dont le diamètre extérieur est alors légèrement inférieur au diamètre de la surface 22, passe à l'intérieur de celle-ci, après quoi il pénètre dans l'élargissement délimité par les surfaces 23, 24 et 25. Lorsqu'il vient en butée contre la surface radiale 25, l'anneau est poussé par celle-ci le long de l'élément mâle 1, et tourne avec l'élément femelle par rapport à l'élément mâle. Il se déforme pour pénétrer dans les filets mâles, et se dilate en suivant le diamètre croissant des fonds des filets évanouissants.

L'état final de l'anneau d'étanchéité est montré sur la figure 5. Il est comprimé radialement entre la surface 22 et les filets évanouissants de l'élément mâle, dans lesquels il s'imprime, sur une fraction de sa longueur, et se prolonge vers l'intérieur du joint, le long du filetage mâle, en remplissant partiellement l'élargissement précité, jusqu'à la surface radiale 25. En outre, une partie du volume de l'anneau est comprimée axialement entre les surfaces 24 et 25, contribuant à l'étanchéité et à la stabilité de la position de l'anneau. La longueur axiale de l'anneau d'étanchéité correspond au moins à un demi-pas des filetages, et avantageusement à un petit multiple du pas.

Les formes du logement 20 et de l'anneau 30 telles que décrites ci-dessus n'ont aucun caractère limitatif, et peuvent être modifiées sans sortir de l'invention. Quelques exemples de telles modifications sont illustrés par les figures 6 à 8.

Ainsi, la figure 6 montre une variante de la lèvre 10 de l'élément femelle 2 dans laquelle le logement 20 présente un diamètre constamment croissant depuis la paroi cylindrique 16 jusqu'à l'extrémité libre 14, la paroi périphérique 26 du logement faisant un angle progressivement décroissant avec l'axe des tubes. Cette inclinaison est forte au voisinage de la paroi 16 pour former un épaulement 27 qui pousse l'anneau d'étanchéité lors du vissage des éléments filetés. L'anneau initial 30 peut ici encore présenter la section transversale rectangulaire illustrée sur la figure 2.

Dans la variante de la figure 7, le logement présente un chanfrein d'entrée 21 et un épaulement 25 semblables à ceux de la figure 3, reliés entre eux par une surface cylindrique 28. L'anneau d'origine formant l'anneau d'étanchéité 35 n'a plus un profil rectangulaire, mais présente, au-delà de la face d'extrémité 34 qui vient s'appuyer sur l'épaulement 25, un appendice 36 en forme de lèvre mince qui recouvre la surface cylindrique 16 de l'élément femelle et pénètre dans la gorge 18, réalisant ainsi un accrochage de l'anneau sur l'élément femelle.

La figure 8 représente une autre variante dans laquelle le logement 20 présente des surfaces 21, 22, 23 et 25 analogues à celles désignées par les mêmes numéros de référence sur la figure 3, la surface tronconique 24 étant remplacée par une surface plane 29 tournée vers l'épaulement 25. L'anneau d'étanchéité peut présenter à l'origine une section rectangulaire, et être entièrement logé, après vissage, entre les épaulements 25 et 29. Dans cette variante également, la gorge 18 est supprimée, sa fonction étant remplie par l'espace annulaire délimité par les surfaces 23, 25 et 29.

## Revendications

1. Procédé de réalisation d'un joint fileté tubulaire comprenant un élément tubulaire mâle (1) comportant un filetage mâle conique (3), un élément tubulaire femelle (2) comportant un filetage femelle conique (4) qui coopère par vissage avec le filetage mâle (3), et un anneau d'étanchéité déformable (35) interposé entre les éléments mâle et femelle de manière à s'opposer à la communication de fluide entre l'extérieur du joint tubulaire et la zone de coopération desdits filetages, l'anneau d'étanchéité étant en contact étanche avec le filetage mâle, et l'élément femelle présentant un logement annulaire (20) pour recevoir l'anneau d'étanchéité, disposé axialement entre son extrémité libre (14) et le filetage femelle et limité axialement par un premier épaulement (25) tourné vers ladite extrémité libre, l'anneau d'étanchéité s'appuyant axialement contre ledit premier épaulement et étant en contact étanche avec la surface périphérique (22) du logement, procédé **caractérisé en ce qu'**on met en place autour dudit filetage mâle un anneau d'étanchéité déformable (30), on engage l'extrémité libre (7) de l'élément mâle (1), et on visse le filetage mâle (3) dans le filetage femelle (4), ledit anneau d'étanchéité, pendant le vissage, étant poussé le long de l'élément mâle par ledit premier épaulement (25), entraîné en rotation par l'élément femelle et comprimé radialement entre le filetage mâle, dans lequel il s'imprime, et ladite surface périphérique (23) du logement (20).

2. Procédé selon la revendication 1, dans lequel l'anneau d'étanchéité est en un matériau choisi parmi les matériaux synthétiques, les métaux malléables et les matériaux composites.

3. Procédé selon l'une des revendications 1 et 2, dans lequel l'anneau d'étanchéité est en un matériau possédant un faible coefficient de frottement avec le matériau de l'élément mâle.

4. Procédé selon l'une des revendications précédentes, dans lequel l'anneau d'étanchéité est en polytétrafluoréthylène chargé ou non.

5. Procédé selon l'une des revendications précédentes, dans lequel le filetage mâle comprend à l'opposé de l'extrémité libre (7) de l'élément mâle des filets dits évanouissants (13) dont la hauteur radiale va généralement en diminuant d'une valeur nominale à une valeur nulle, et l'anneau d'étanchéité est en contact étanche avec lesdits filets évanouissants sur une partie au moins de sa longueur axiale.

6. Procédé selon la revendication 5, dans lequel l'anneau d'étanchéité est en contact avec lesdits filets évanouissants sur toute sa longueur axiale.

7. Procédé selon la revendication 6, dans lequel on met en place l'anneau d'étanchéité (30) autour desdits filets évanouissants (13).

8. Procédé selon l'une des revendications 6 et 7, dans lequel l'élément mâle est usiné (41), sur une fraction au moins de la longueur axiale des filets évanouissants, à un diamètre constant supérieur au diamètre des fonds des filets concernés.

9. Procédé selon la revendication 8, dans lequel on met en place l'anneau d'étanchéité (30) autour de la région (41) de l'élément mâle usinée à diamètre constant.

10. Procédé selon l'une des revendications précédentes, dans lequel ledit logement présente un second épaulement (24) tourné axialement vers le premier épaulement et d'un diamètre minimal supérieur à celui du premier épaulement, une partie du volume de l'anneau d'étanchéité étant comprimée axialement entre les premier et second épaulements.

11. Procédé selon l'une des revendications précédentes, dans lequel le premier épaulement, ou l'un au moins des premier et second épaulements, est incliné par rapport à l'axe des filetages.

12. Procédé selon l'une des revendications précédentes, dans lequel ledit logement débouche à l'extrémité libre (14) de l'élément femelle par un évasement (21).

13. Procédé selon l'une des revendications précédentes, dans lequel l'élément mâle (1) présente, au voisinage de son extrémité libre, une surface de butée axiale (7) propre à coopérer avec une surface de butée axiale (8) de l'élément femelle (2) pour limiter le vissage.

14. Procédé selon l'une des revendications précédentes, dans lequel des moyens d'étanchéité supplémentaires (5, 6) sont prévus pour interdire toute communication de fluide entre l'intérieur du joint tubulaire et la zone de coopération des filetages.

15. Procédé selon l'une des revendications précédentes, dans lequel on met en place l'anneau d'étanchéité avec serrage sur le filetage mâle.

16. Procédé selon l'une des revendications précédentes, dans lequel on met en place l'anneau d'étanchéité autour du filetage mâle à une température telle que son diamètre intérieur soit supérieur au diamètre extérieur des filets sous-jacents, son diamètre intérieur étant inférieur au diamètre extérieur des filets sous-jacents à la température ambiante.

17. Procédé selon l'une des revendications précédentes, dans lequel l'anneau d'étanchéité (30) est un anneau torique de section rectangulaire allongée dans la direction axiale.

18. Procédé selon la revendication 17, dans lequel le diamètre extérieur de l'anneau d'étanchéité après sa mise en place autour du filetage mâle est légèrement inférieur au rayon minimal de la surface périphérique dudit logement.

19. Joint fileté tubulaire, comprenant un élément tubulaire mâle (1) comportant un filetage mâle conique (3), un élément tubulaire femelle (2) comportant un filetage femelle conique (4) qui coopère par vissage avec le filetage mâle (3), et un anneau d'étanchéité déformable (35) qui s'interpose après serrage entre les élément mâle et femelle de manière à s'opposer à la communication de fluide entre l'extérieur du joint tubulaire et la zone de coopération desdits filetages,
l'élément femelle présentant un logement annulaire (20), disposé axialement entre son extrémité libre (14) et le filetage femelle et limité axialement par un premier épaulement (25) tourné vers ladite extrémité libre, **caractérisé en ce que** l'anneau d'étanchéité déformable (35) est monté sur l'élément mâle pour être en contact étanche avec le filetage mâle,
**en ce que** le diamètre extérieur au repos de l'anneau (35) est un peu inférieur au diamètre intérieur du logement (20), tandis qu'au serrage, ledit logement (20) reçoit l'anneau d'étanchéité, lequel s'appuie axialement contre ledit premier épaulement (25) et vient en contact étanche avec la surface périphérique (22) du logement (20).

20. Joint fileté tubulaire selon la revendication 19, dans lequel les premier et seconds épaulements (25, 24) sont respectivement perpendiculaire à l'axe des filetages et incliné par rapport à celui-ci.

21. Joint fileté tubulaire selon la revendication 19, dans lequel le logement (20) présente un diamètre constamment croissant en direction de l'extrémité libre (14) de l'élément femelle, sa paroi périphérique (26) étant fortement inclinée par rapport à l'axe des filetages à l'opposé de ladite extrémité libre pour former un épaulement (27) propre à pousser l'anneau d'étanchéité lors du vissage des éléments filetés, et son angle décroissant ensuite progressivement.

22. Joint fileté tubulaire selon la revendication 19, dans lequel ledit évasement (21) et le premier épaulement (25) sont reliés entre eux par une surface cylindrique (28).

## Claims

1. A method of producing a tubular threaded joint comprising a male tubular element (1) having a conical male thread (3), a female tubular element (2) having a conical female thread (4) which interacts by screwing with the male thread (3), and a deformable sealing ring (35) interposed between the male and female elements in such a way as to oppose the communication of fluid between the outside of the tubular joint and the zone of interaction of said threads, the sealing ring being in sealed contact with the male thread, and the female element having an annular housing (20) to receive the sealing ring, disposed axially between its free end (14) and the female thread and limited axially by a first shoulder (25) facing said free end, the sealing ring bearing axially against said first shoulder and being in sealed contact with the peripheral surface (22) of the housing, **characterized in that** a deformable sealing ring (30) is placed around said male thread, the free end (7) of the male element (1) is engaged, and the male thread (3) is screwed into the female thread (4), said sealing ring, during the screwing, being pushed along the male element by said first shoulder (25), rotated by the female element and compressed radially between the male thread, into which it is pressed, and said peripheral surface (23) of the housing (20).

2. The method as claimed in claim 1, in which the sealing ring is made of a material chosen from synthetic materials, malleable metals and composite materials.

3. The method as claimed in one of claims 1 and 2, in which the sealing ring is made of a material having a low coefficient of friction with the material of the male element.

4. The method as claimed in one of the preceding claims, in which the sealing ring is made of filled or unfilled polytetrafluoroethylene.

5. The method as claimed in one of the preceding claims, in which the male thread comprises at the end opposite the free end (7) of the male element of the threads called vanishing threads (13) whose radial height usually diminishes from a nominal value to a zero value, and the sealing ring is in sealed contact with said vanishing threads over at least a portion of its axial length.

6. The method as claimed in claim 5, in which the sealing ring is in contact with said vanishing threads over all its axial length.

7. The method as claimed in claim 6, in which the sealing ring (30) is placed around said vanishing threads (13).

8. The method as claimed in one of claims 6 and 7, in which the male element is machined (41), over at least a fraction of the axial length of the vanishing threads, to a constant diameter greater than the diameter of the thread roots concerned.

9. The method as claimed in claim 8, in which the sealing ring (30) is placed around the region (41) of the male element machined to a constant diameter.

10. The method as claimed in one of the preceding claims, in which said housing has a second shoulder (24) axially facing the first shoulder and with a minimal diameter greater than that of the first shoulder, a portion of the volume of the sealing ring being compressed axially between the first and second shoulders.

11. The method as claimed in one of the preceding claims, in which the first shoulder, or at least one of the first and second shoulders, is inclined relative to the axis of the threads.

12. The method as claimed in one of the preceding claims, in which said housing emerges at the free end (14) of the female element in a flare (21).

13. The method as claimed in one of the preceding claims, in which the male element (1) has, in the vicinity of its free end, an axial abutment surface (7) suitable for interacting with an axial abutment surface (8) of the female element (2) to limit the screwing.

14. The method as claimed in one of the preceding claims, in which additional sealing means (5, 6) are provided to prevent any communication of fluid between the interior of the tubular joint and the zone of interaction of the threads.

15. The method as claimed in one of the preceding claims, in which the sealing ring is screwed onto the male thread.

16. The method as claimed in one of the preceding claims, in which the sealing ring is placed around the male thread at a temperature such that its internal diameter is greater than the external diameter of the underlying threads, its internal diameter being less than the external diameter of the underlying threads at ambient temperature.

17. The method as claimed in one of the preceding claims, in which the sealing ring (30) is an O-ring of rectangular section elongated in the axial direction.

18. The method as claimed in claim 17, in which the external diameter of the sealing ring after it has been placed around the male thread is slightly less than the minimal radius of the peripheral surface of said housing.

19. A tubular threaded joint comprising a male tubular element (1) having a conical male thread (3), a female tubular element (2) having a conical female thread (4) which interacts by screwing with the male thread (3), and a deformable sealing ring (35) which interposes after tightening between the male and female elements in such a way as to oppose the communication of fluid between the outside of the tubular joint and the zone of interaction of said threads, the female element having an annular housing (20) disposed axially between its free end (14) and the female thread and axially limited by a first shoulder (25) facing said free end, **characterized in that** the deformable sealing ring is fixed on the male element to be in sealed contact with the male thread, **in that** the external diameter before insertion of the ring (35) is slightly less than the internal diameter of the housing (20), whereas during tightening, said housing (20) receives the sealing ring which bears axially against said first shoulder (25) and comes into sealed contact with the peripheral surface (22) of the housing (20).

20. The tubular threaded joint as claimed in claim 19, in which the first and second shoulders (25, 24) are respectively perpendicular to the axis of the threads and inclined relative to the latter.

21. The tubular threaded joint as claimed in claim 19, in which the housing (20) has a diameter constantly increasing toward the free end (14) of the female element, its peripheral wall (26) being greatly inclined relative to the axis of the threads at the end opposite said free end to form a shoulder (27) capable of pushing the sealing ring during screwing of the threaded elements, and its angle then decreasing progressively.

22. The tubular threaded joint as claimed in claim 19, in which said flare (21) and the first shoulder (25) are connected together by a cylindrical surface (28).

## Patentansprüche

1. Verfahren zur Herstellung einer Rohrgewindeverbindung, die ein Einsteck-Rohrelement (1) mit einem kegeligen Außengewinde (3), ein Aufnahme-Rohrelement (2) mit einem kegeligen Innengewinde (4), das durch Schraubverbindung mit dem Außengewinde (3) zusammenwirkt, und einen verformbaren Dichtring (35) aufweist, der zwischen das Einsteck- und das Aufnahmeelement eingefügt ist, um der Fluidverbindung zwischen der Außenumgebung der Rohrverbindung und der Zusammenwirkzone der Gewinde entgegenzuwirken, wobei der Dichtring mit dem Außengewinde in dichtem Kontakt ist, und wobei das Aufnahmeelement eine ringförmige Aufnahme (20) zur Aufnahme des Dichtrings aufweist, die axial zwischen seinem freien Ende (14) und dem Innengewinde angeordnet ist und axial von einer zum freien Ende weisenden ersten Schulter (25) begrenzt wird, wobei der Dichtring axial gegen die erste Schulter anliegt und mit der Umfangsfläche (22) der Aufnahme in dichtem Kontakt steht, wobei das Verfahren **dadurch gekennzeichnet ist, dass** um das Außengewinde herum ein verformbarer Dichtring (30) eingesetzt wird, das freie Ende (7) des Einsteckelements (1) eingeführt wird, und das Außengewinde (3) in das Innengewinde (4) geschraubt wird, wobei der Dichtring während des Schraubvorgangs von der ersten Schulter (25) entlang des Einsteckelements geschoben wird, vom Aufnahmeelement in Drehung versetzt wird, und radial zwischen dem Außengewinde, in das er sich eindrückt, und der Umfangsfläche (23) der Aufnahme (20) zusammengedrückt wird.

2. Verfahren nach Anspruch 1, bei dem der Dichtring aus einem Werkstoff besteht, der aus den synthetischen Werkstoffen, den verformbaren Metallen und den Verbundwerkstoffen ausgewählt wird.

3. Verfahren nach einem der Ansprüche 1 und 2, bei dem der Dichtring aus einem Werkstoff besteht, der einen geringen Reibungskoeffizient mit dem Werkstoff des Einsteckelements besitzt.

4. Verfahren nach einem der vorhergehenden Ansprüche, bei dem der Dichtring aus angereichertem oder nicht angereichertem Polytetrafluorethylen ist.

5. Verfahren nach einem der vorhergehenden Ansprüche, bei dem das Außengewinde entgegengesetzt zum freien Ende (7) des Einsteckelements so genannte Gewindegänge mit abnehmender Höhe (13) aufweist, deren radiale Höhe allgemein von einem Nennwert zu einem Nullwert abnimmt, und der Dichtring über mindestens einen Teil seiner axialen Länge mit den Gewindegängen mit abnehmender Höhe in dichtem Kontakt steht.

6. Verfahren nach Anspruch 5, bei dem der Dichtring über seine ganze axiale Länge mit den Gewindegängen mit abnehmender Höhe in Kontakt steht.

7. Verfahren nach Anspruch 6, bei dem der Dichtring (30) um die Gewindegänge mit abnehmender Höhe (13) herum eingesetzt wird.

8. Verfahren nach einem der Ansprüche 6 und 7, bei dem das Einsteckelement über mindestens einen Bruchteil der axialen Länge der Gewindegänge mit abnehmender Höhe auf einen konstanten Durchmesser größer als der Durchmesser der Gründe der betroffenen Gewindegänge bearbeitet ist (41).

9. Verfahren nach Anspruch 8, bei dem der Dichtring (30) um den Bereich (41) des Einsteckelements eingesetzt wird, der auf einen konstanten Durchmesser bearbeitet ist.

10. Verfahren nach einem der vorhergehenden Ansprüche, bei dem die Aufnahme eine zweite Schulter (24) aufweist, die axial zur ersten Schulter weist und einen größeren Mindestdurchmesser als die erste Schulter aufweist, wobei ein Teil des Volumens des Dichtrings axial zwischen der ersten und der zweiten Schulter zusammengedrückt wird.

11. Verfahren nach einem der vorhergehenden Ansprüche, bei dem die erste Schulter, oder mindestens eine der ersten und zweiten Schultern, bezüglich der Achse der Gewinde geneigt ist.

12. Verfahren nach einem der vorhergehenden Ansprüche, bei dem die Aufnahme am freien Ende (14) des Aufnahmeelements in einer Ausweitung (21) mündet.

13. Verfahren nach einem der vorhergehenden Ansprüche, bei dem das Einsteckelement (1) in der Nähe seines freien Endes eine axiale Anschlagfläche (7) aufweist, die geeignet ist, um mit einer axialen Anschlagfläche (8) des Aufnahmeelements (2) zum Begrenzen des Schraubvorgangs zusammenzuwirken.

14. Verfahren nach einem der vorhergehenden Ansprüche, bei dem zusätzliche Dichtmittel (5, 6) vorgesehen sind, um jede Fluidverbindung zwischen dem Inneren der Rohrverbindung und der Zusammenwirkzone der Gewinde zu verhindern.

15. Verfahren nach einem der vorhergehenden Ansprüche, bei dem der Dichtring mit Spannen auf dem Außengewinde eingesetzt wird.

16. Verfahren nach einem der vorhergehenden Ansprüche, bei dem der Dichtring bei einer solchen Temperatur um das Außengewinde eingesetzt wird, dass sein Innendurchmesser größer ist als der Außendurchmesser der darunter liegenden Gewindegänge, während sein Innendurchmesser bei Umgebungstemperatur kleiner ist als der Außendurchmesser der darunter liegenden Gewindegänge.

17. Verfahren nach einem der vorhergehenden Ansprüche, bei dem der Dichtring (30) ein kegeliger Ring mit länglichem Rechteckquerschnitt in der axialen Richtung ist.

18. Verfahren nach Anspruch 17, bei dem der Außendurchmesser des Dichtrings nach seinem Einsetzen um das Außengewinde geringfügig kleiner als der Mindestradius der Umfangsfläche der Aufnahme ist.

19. Rohrgewindeverbindung, die ein Einsteck-Rohrelement (1), das ein kegeliges Außengewinde (3) aufweist, ein Aufnahme-Rohrelement (2), das ein kegeliges Innengewinde (4) aufweist, das durch Schraubverbindung mit dem Außengewinde (3) zusammenwirkt, und einen verformbaren Dichtring (35) aufweist, der sich nach dem Spannen zwischen das Einsteck- und das Aufnahmeelement einfügt, um der Fluidverbindung zwischen der Außenumgebung der Rohrverbindung und der Zusammenwirkzone der Gewinde entgegenzuwirken, **dadurch gekennzeichnet, dass** das Aufnahmeelement eine ringförmige Aufnahme (20) aufweist, die axial zwischen seinem freien Ende (14) und dem Innengewinde angeordnet ist und axial von einer zum ersten Ende weisenden ersten Schulter (25) begrenzt wird, **dadurch gekennzeichnet, dass** der verformbare Dichtring (35) auf das Einsteckelement montiert wird, um mit dem Außengewinde in dichtem Kontakt zu stehen, dass der Außendurchmesser des Rings (35) in der Ruhestellung etwas kleiner ist als der Innendurchmesser der Aufnahme (20), während beim Spannen die Aufnahme (20) den Dichtring aufnimmt, der sich axial gegen die erste Schulter (25) anlegt und mit der Umfangsfläche (22) der Aufnahme (20) in dichten Kontakt kommt.

20. Rohrgewindeverbindung nach Anspruch 19, bei der die erste und die zweite Schulter (25, 24) lotrecht zur Achse der Gewinde bzw. bezüglich dieser Achse geneigt sind.

21. Rohrgewindeverbindung nach Anspruch 19, bei der die Aufnahme (20) einen in Richtung des freien Endes (14) des Aufnahmeelements stetig zunehmenden Durchmesser hat, wobei ihre Umfangswand (26) bezüglich der Achse der Gewinde entgegengesetzt zum freien Ende stark geneigt ist, um eine Schulter (27) zu bilden, die geeignet ist, um den Dichtring beim Verschrauben der Gewindeelemente zu schieben, und ihr Winkel anschließend progressiv abnimmt.

22. Rohrgewindeverbindung nach Anspruch 19, bei der die Ausweitung (21) und die erste Schulter (25) durch eine zylindrische Fläche (28) miteinander verbunden sind.
